(19) Europäisches Patentamt
European Patent Office
Office européen des brevets

(11) **EP 4 815 528 A1**

(12) **EUROPEAN PATENT APPLICATION**
published in accordance with Art. 153(4) EPC

(43) Date of publication:
**30.09.2026 Bulletin 2026/40**

(21) Application number: **23959505.1**

(22) Date of filing: **24.11.2023**

(51) International Patent Classification (IPC):
***H04W 8/22*** *(2009.01)* ***H04W 84/06*** *(2009.01)*

(52) Cooperative Patent Classification (CPC):
**H04W 8/22; H04W 84/06**

(86) International application number:
**PCT/JP2023/042237**

(87) International publication number:
**WO 2025/109763 (30.05.2025 Gazette 2025/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **NTT DOCOMO, INC.**
**Tokyo 100-6150 (JP)**

(72) Inventors:
- **HOKAZONO, Yuki**
  **Tokyo 100-6150 (JP)**
- **KOHARA, Hinata**
  **Tokyo 100-6150 (JP)**
- **MUROKI, Yuto**
  **Tokyo 100-6150 (JP)**
- **SHIMAMURA, Atsunori**
  **Tokyo 100-6150 (JP)**
- **YOSHIOKA, Shohei**
  **Tokyo 100-6150 (JP)**
- **FUKASAWA, Kenji**
  **Tokyo 100-6150 (JP)**
- **MORIHIRO, Yoshifumi**
  **Tokyo 100-6150 (JP)**
- **NAGATA, Satoshi**
  **Tokyo 100-6150 (JP)**

(74) Representative: **Hoffmann Eitle**
**Patent- und Rechtsanwälte PartmbB**
**Arabellastraße 30**
**81925 München (DE)**

# (54) TERMINAL, WIRELESS BASE STATION, AND WIRELESS COMMUNICATION METHOD

(57) A terminal includes a transmission unit that transmits capability information of the terminal related to a non-terrestrial network to a radio base station; and a control unit that executes communication configurations via the non-terrestrial network based on the capability information. The transmission unit transmits additional capability information of the terminal that is applied in the case of using a terrestrial network node located in the air when the terrestrial network node exists between the terminal and the radio base station.

FIG. 5

UE
gNB
(Gateway)
SIB
DETERMINE NETWORK TO BE USED
UE Capability
(Extra-TN capability)
COMMUNICATION CONFIGURATION

EP 4 815 528 A1

## Description

### TECHNICAL FIELD

The present disclosure relates to a terminal using a non-terrestrial network, a radio base station, and a radio communication method.

### BACKGROUND ART

The 3rd Generation Partnership Project (3GPP: Registered Trademark) has developed specifications for the 5th generation mobile communication system (5G, also called New Radio (NR) or Next Generation (NG)), and is also developing specifications for the next generation called Beyond 5G, 5G Evolution, or 6G.

In addition, integration with a non-terrestrial network (NTN) is envisioned to realize the provision of various services in areas that cannot be covered by a mobile communication network (Public Land Mobile Network (PLMN)), which is mainly based on a terrestrial network (TN).

For example, a multilayer network using geostationary orbit satellites (GEOs), low earth orbit satellites (LEOs), and high-altitude platform stations (HAPSs) has been considered (Patent Literature 1).

When a network including a radio base station (gNB) uses a network including a satellite as described above, the gNB is configured after deciding whether to operate as TN or NTN. A terminal (user equipment, UE) can transmit nonTerrestrialNetwork-r17 to the network as UE-NR-Capability of NTN (Non-Patent Literature 1).

As long as the UE is not notified from the network that the network will be operated as NTN, the UE operates on the assumption that TN will be used, that is, executes various communication settings, or the like, even when using a network via a satellite as described above.

### CITATION LIST

### PATENT LITERATURE

Patent Literature 1: WO 2023/053298

### NON-PATENT LITERATURE

Non-Patent Literature 1: 3GPP TS 38.331 V17.5.0, 3rd Generation Partnership Project; Technical Specification Group Radio Access Network; NR; Radio Resource Control (RRC) protocol specification (Release 17), 3GPP, June 2023

### SUMMARY OF THE INVENTION

A HAPS has an altitude different from an unmanned aerial vehicle (UAV) or a GEO/LEO. Specifically, a line-of-sight distance between the HAPS and the UE may be approximately 100 km, and the HAPS is a special altitude airborne node located on the boundary line acceptable as the TN in 3GPP.

When a network via the HAPS is operated as a TN, even when the UE in a cell via the TN has a capability to support an NTN, it cannot utilize the capability, and the network (gNB) treats the UE as a terminal for a normal TN.

Therefore, the following disclosure has been made in view of such circumstances, and it is an object of the present invention to provide a terminal, a radio base station, and a radio communication method capable of executing appropriate communication settings in accordance with terminal capabilities even when the communication is performed via a special altitude airborne node such as a HAPS.

One aspect of the present disclosure is a terminal including a transmission unit (capability information transmission unit (320)) that transmits capability information of the terminal related to a non-terrestrial network to a radio base station, and a control unit (control unit (340)) that executes communication configuration via the non-terrestrial network based on the capability information, wherein the transmission unit transmits additional capability information of the terminal that is applied in the case of using a terrestrial network node located in the air when the terrestrial network node exists between the terminal and the radio base station.

### BRIEF DESCRIPTION OF THE DRAWINGS

[FIG. 1] FIG. 1 is an overall schematic block diagram of a radio communication system 10.

[Fig.2] FIG. 2 is a functional block diagram of UE 300.

[FIG. 3] FIG. 3 is a functional block diagram of a gateway device 100.

[FIG. 4] FIG. 4 is a diagram illustrating an example of a communication distance between a gateway device (gNB) and UE 300 via a HAPS.

[FIG. 5] FIG. 5 is a diagram illustrating an example transmission sequence of UE capability information (Extra-TN capability).

[FIG. 6] FIG. 6 is a diagram illustrating an example configuration of an Extra TN dedicated cell and a TN cell formed via an airborne TN node.

[FIG. 7] FIG. 7 is a diagram illustrating an example of a function that may be required in an Extra TN dedicated cell.

[FIG. 8] FIG. 8 is a view illustrating an example hardware configuration of the gateway device 100 and the UE 300.

[FIG. 9] FIG. 9 is a view illustrating an example configuration of a vehicle 2001.

DESCRIPTION OF EMBODIMENTS

Embodiments will be described below with reference to the drawings. It should be noted that the same functions and configurations are denoted by the same or similar reference numerals, and description thereof will be omitted as appropriate.

(1) Overall Schematic Configuration of Radio Communication System

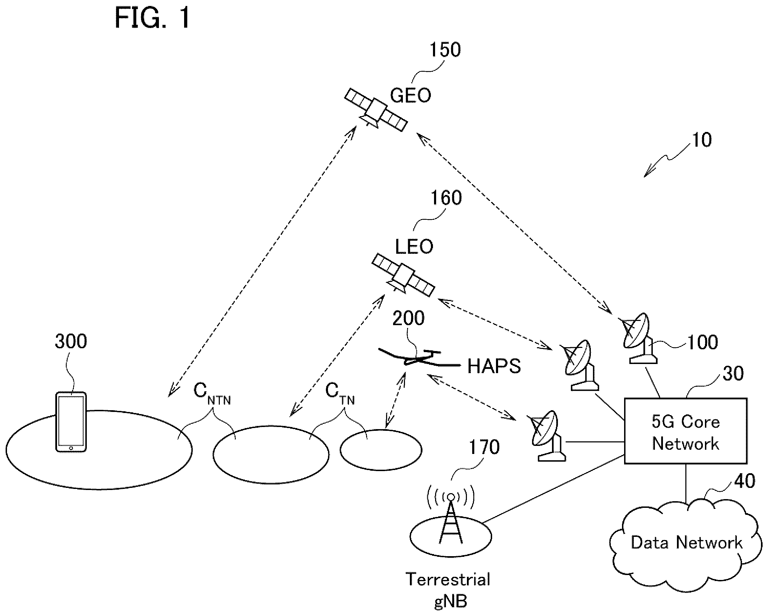

FIG. 1 is an overall schematic configuration diagram of a radio communication system 10 according to this embodiment. As illustrated in FIG. 1, the radio communication system 10 includes a terrestrial network (TN) and a non-terrestrial network (NTN).

In this embodiment, the TN may include a mobile communication network (Public Land Mobile Network (PLMN)) in accordance with the specifications of the 5th generation mobile communication system (5G, also called New Radio (NR) or Next Generation (NG)) of the 3rd Generation Partnership Project (3GPP: Registered Trademark), or a next generation specification called Beyond 5G, 5G Evolution, or 6G. The PLMN may include a 5GC30, a data network 40, and a gNB 170 (Terrestrial gNB) which is a radio base station provided on the ground. The PLMN may include a radio access network (NG-RAN), which is not illustrated.

The 5GC30 is a core network (CN) in accordance with 5G. The data network 40 may be connected to the 5GC30. The data network 40 is a communication network for relaying data (user data) transmitted and received by the terminal 300(UE 300, User Equipment, UE), and may include the Internet. Hereinafter, the various networks described above will be referred to simply as networks, as appropriate.

NTNs may include a geostationary orbit satellite (GEO : Geostationary Orbit Satellite, GEO 150), a low earth orbit satellite (LEO : Low Earth Orbit satellite, LEO 160), and a high-altitude pseudo-satellite (HAPS ; High-Altitude Platform Station, HAPS 200). The GEO 150 may be a satellite located at an altitude of about 36,000 km and having a geostationary orbit. The LEO 160 may be a satellite located at an altitude of 500 to 2,000 km and orbiting with a period of 88 to 127 minutes. The HAPS 200 may be a flying object located at an altitude of 8 to 50 km and performing a circular flight.

It should be noted that a line-of-sight distance between the UE 300 and each satellite (or a linear distance between the UE 300 and a ground position directly below the satellite) may be longer. For example, in the case of the HAPS 200, the distance may be about 100 km.

The GEO 150, the LEO 160, and the HAPS 200 may each be connected to a gateway device 100 via radio links. A radio link between the gateway device 100 and the GEO 150, the LEO 160 or HAPS200 may be called a feeder link (FL). A radio link between the GEO 150, the LEO 160 or the HAPS 200, and the UE 300 may be called a service link (SL).

As a system of the GEO 150, the LEO 160, and the HAPS 200 (relay station device), either a retransmission (Transparent) type or a regenerative type (Regenerative) may be applied (see 3GPP TR 38.821 V16.0.0). The regenerative type may be called a regenerative relay type or a base station type, and the function of the radio base station (or part thereof) is mounted on a satellite (GEO 150, LEO 160, or HAPS 200).

The retransmission type may be called a repeater type or a non-regenerative relay type, and the function of the radio base station is not mounted on the satellite. In the case of the retransmission type, the function of the radio base station may be mounted on the gateway device 100 or a network node separate from the gateway device 100, provided on the 5GC30 side relative to the gateway device 100.

In the radio communication system 10, a multilayer network (NTN) is formed by the GEO 150, the LEO 160 or the HAPS 200 in cooperation with the TN (PLMN). The UE 300 can be seamlessly connected to the TN (PLMN) via the GEO 150, the LEO 160 or the HAPS 200.

In the radio communication system 10 including the TN and the NTN, two types of cells may be formed. Specifically, a TN cell $C_{TN}$ and an NTN cell $C_{NTN}$ may be formed.

The network (operator) may configure the gNB (or gateway device) after determining in advance whether to

operate it as the TN cell $C_{TN}$ or the NTN cell $C_{NTN}$. The UE 300 may operate on the assumption that the gNB is the TN cell $C_{TN}$ unless there is a notification from the network that the gNB is the NTN cell $C_{NTN}$.

That is, even in the case of a cell formed via the GEO 150, the LEO 160, or the HAPS 200, the gNB may be operated as the TN cell $C_{TN}$, and the UE 300 may operate as accessing the TN cell $C_{TN}$. In this case, a special implementation is required for cells via the GEO 150 and the LEO 160, which have large delay in radio sections. For cells via the HAPS 200, communication is possible up to a certain cell radius even gNB operation as a normal TN. In this way, TN cells $C_{TN}$ and NTN cells $C_{NTN}$ can coexist in a multilayer network such as the radio communication system 10. As described above, cells via the GEO 150 or the LEO 160 may be operated as the NTN cell $C_{NTN}$, and cells via the gNB 170 (Terrestrial gNB) or the HAPS 200 may be operated as the TN cell $C_{TN}$.

When operated as the NTN cells $C_{NTN}$, even cells via the GEO 150 or the LEO 160, which have a large delay in the radio sections, can communicate in accordance with NR NTN specifications specified by the 3GPP. Although cells via the HAPS 200 can also communicate in accordance with the NR NTN specifications, cells via the HAPS 200, which do not have a large delay amount compared with cells via the GEO 150 or LEO 160, may be overspecified in terms of synchronization establishment procedures. Therefore, the cell via the HAPS 200 may normally be operated as the TN cell $C_{TN}$. From this point of view, the HAPS 200 may be interpreted as not being a component of the NTN.

When operating as the NTN cell $C_{NTN}$, the UE 300 recognizes that the cell is the NTN cell $C_{NTN}$ by receiving broadcast information from the network, specifically System Information Block (SIB) 1. When the UE 300 is an NTN-capable UE, the UE 300 connects to the cell. That is, only an NTN-capable UE can connect to the NTN cell $C_{NTN}$.

Further, after receiving SIB1, the UE 300 receives additional broadcast information, specifically SIB19 for reporting information required for an NTN access from the network, and can execute synchronization establishment processing (NTN-specific sync) for the NTN based on the SIB19.

(2) Functional block Configuration of Radio Communication System

Next, a functional block configuration of the radio communication system 10 will be described. Specifically, functional block configurations of the gateway device 100 and the UE 300 will be described. Hereinafter, for convenience of explanation, the UE 300 will be described first.

(2.1) UE 300

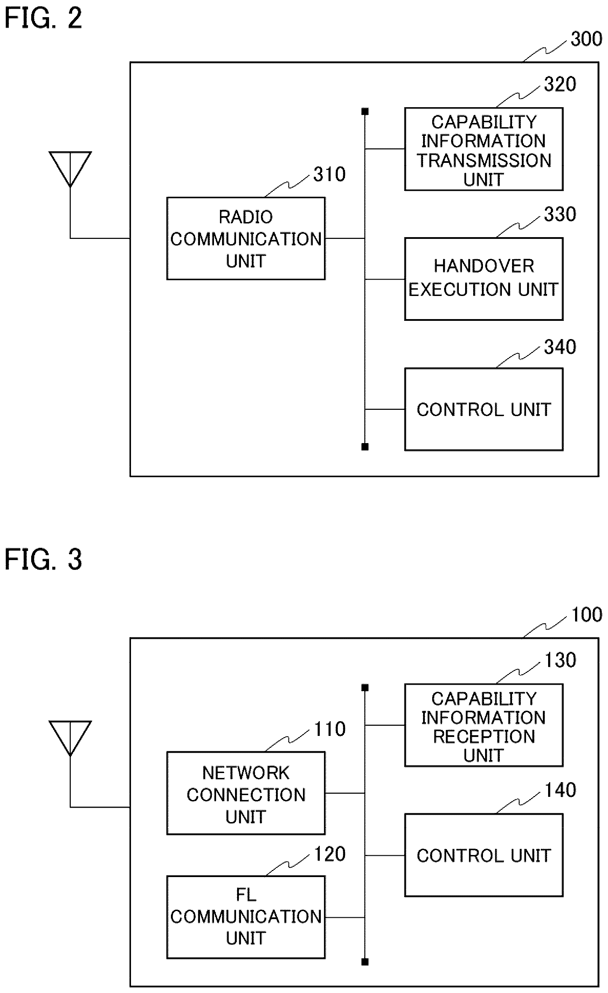

FIG. 2 is a functional block diagram of the UE 300. As illustrated in FIG. 2, the UE 300 includes a radio communication unit 310, a capability information transmission unit 320, a handover execution unit 330, and a control unit 340.

The radio communication unit 310 transmits and receives radio signals in accordance with 5G, 6G, or the like. Specifically, the radio communication unit 310 transmits an uplink signal (UL signal) in accordance with 5G and receives a downlink signal (DL signal) in accordance with 5G.

The radio communication unit 310 can execute radio communication via the TN cell $C_{TN}$ or the NTN cell $C_{NTN}$. Specifically, the radio communication unit 310 directly communicates with the gNB 170 when the UE 300 is located in the TN cell $C_{TN}$. When the UE 300 is located in the NTN cell $C_{NTN}$, the radio communication unit 310 communicates with the gateway device 100 (radio base station function) via the GEO 150 or the LEO 160.

The cell formed via the LEO 160 or the HAPS 200 may be operated as the TN cell $C_{TN}$ or the NTN cell $C_{NTN}$.

The capability information transmission unit 320 transmits capability information (UE Capability Information) of the UE 300 to the network. In particular, in this embodiment, the capability information transmission unit 320 can transmit capability information of the UE 300 related to the non-terrestrial network (NTN) to the radio base station (gNB). In this embodiment, the capability information transmission unit 320 constitutes a transmission unit.

Specifically, the capability information transmission unit 320 can transmit nonTerrestrialNetwork-r17 (see 3GPP TS 38.331) as the UE-NR-Capability of the NTN. The UE-NR-Capability is an information element (IE) that conveys the support status of NR UE Radio Access Capability Parameters specified in 3GPP TS38.306. The nonTerrestrialNetwork-r17 is included in the UE-NR-Capability, and can indicate whether the UE 300 supports the NTN.

When a terrestrial network node located in the air (referred to as an airborne TN node) exists between the UE 300 and the gNB (which may include the gateway device 100), the capability information transmission unit 320 may transmit additional capability information of the UE 300 that is applied when the airborne TN node is used. Specifically, the capability information transmission unit 320 can transmit specific UE Capability Information (Extra-TN capability) that is applied when an airborne TN node exists on the path between the UE 300 and the gNB.

The airborne TN node is typically the HAPS 200, but may include the LEO 160 or the like. The airborne TN node may be interpreted as a node constituting a network which exists in the air but is operated as an TN, not NTN, as a network type. The Extra-TN capability may be configured (may be partially configured) by Capability Parameters according to the nonTerrestrialNetwork-r17 of the 3GPP NTN specification, and such Capability Parameters may also be made available to

the TN cell $C_{TN}$. The Extra-TN capability may be configured by not only the nonTerrestrialNetwork-r17 but also by at least a part of Capability Parameters according to other IEs (for example, NTN-Parameters-r17) related to NTN.

Thus, the capability information transmission unit 320 can transmit the Extra-TN capability (additional capability information) that includes at least a part of the UE Capability Information (capability information) of the UE 300 related to the NTN.

The content of the Extra-TN capability is not particularly limited, but may include, for example, pre-compensation of UL transmission by the UE 300, extension of conditional handover (CHO ; Conditional Handover), use of Mapped Cell ID, or the like. The CHO can perform a UE 300 initiated handover when a specific execution condition is met. If the CHO is not applicable, a normal handover may be performed ( which may be called CHO recovery). The Mapped Cell ID is used to identify a specific region regardless of the type of an NTN payload or a service link.

The Extra-TN capability may also modify the performance of existing functions of the UE 300. For example, the Extra-TN capability may be configured by capability information applicable only during communication via an airborne TN node. Specifically, as Capabilities applicable only during communication via an airborne TN node, at least some of the capabilities specified in the 3GPP TS38.306 may be specified, such as frequency band used, transmission power, carrier aggregation (CA) support, and the number of repetitions of UL physical channels. The Capability applied only during communication via the airborne TN node may not be applied during direct communication with the gNB 170 (Terrestrial gNB).

The Extra-TN capability may be defined as a dedicated Capability applied only during communication via the airborne TN node, or may be common to the Capability applied during communication via the TN and/or NTN.

The capability information transmission unit 320 may transmit the Extra-TN capability indicating that communication via the airborne TN node is supported. That is, when performing communication via the airborne TN node, the capability information transmission unit 320 may transmit the Extra-TN capability including information indicating that the airborne TN node is supported.

Further, the capability information transmission unit 320 may transmit the Extra-TN capability for frequency bands (band) or each combination of the frequency bands to be used. That is, the Extra-TN capability may be configured for bands or each combination of the bands. Alternatively, the Extra-TN capability may be configured for each UE.

The handover execution unit 330 executes a handover of the UE 300. Specifically, the handover execution unit 330 executes a handover (which may include the CHO) from a source cell to a target cell. The handover execution unit 330 may execute a handover from the TN cell $C_{TN}$ to the NTN cell $C_{NTN}$, or a handover from the NTN cell $C_{NTN}$ to the TN cell $C_{TN}$.

Note that the TN cell $C_{TN}$ may be changed to the NTN cell $C_{NTN}$ by switching the feeder link (FL). Similarly, the NTN cell $C_{NTN}$ may be changed to the TN cell $C_{TN}$ by switching the feeder link (FL). In this case, a relay station device such as the HAPS 200 may execute the handover. A satellite (route) change by switching the FL in this manner may be called site diversity in the FL.

The control unit 340 controls each functional block constituting the UE 300. In particular, in this embodiment, the control unit 340 executes control based on the UE Capability Information of the UE 300.

Specifically, the control unit 340 can execute various communication configurations corresponding to the UE Capability Information of the UE 300. For example, based on the UE Capability Information, the control unit 340 executes communication configurations for communication via the TN. Further, the control unit 340 executes communication configurations for communication via the NTN.

The communication configurations may mean settings of radio resources required for connecting to a radio base station (gNB) via the TN or NTN. Examples of communication configurations include settings related to a band to be used, transmission power, CA support, and the CHO.

The control unit 340 may execute the communication configuration via the NTN based on the UE Capability Information of the UE 300 as described above.

(2.2) Gateway Device 100

FIG. 3 is a functional block diagram of the gateway device 100. As illustrated in FIG. 3, the gateway device 100 includes a network connection unit 110, an FL communication unit 120, a capability information reception unit 130, and a control unit 140. As described above, the gateway device 100 may include a function of a radio base station (gNB).

The network connection unit 110 provides a connection interface with the 5GC30. The network connection unit 110 includes a specific interface (for example, NG interface) between the gateway devices 100 and the 5GC30 specified in 3GPP, and can execute connection with the 5GC30.

The FL communication unit 120 executes radio communication with the GEO 150, the LEO 160, or the HAPS 200 via a radio link (feeder link). The frequency bands for the feeder link (FL) may be different for the GEO 150, the LEO160, or the HAPS 200, but the same or similar frequency bands may be used. The frequency band of the FL for the HAPS 200 may be higher than the frequency bands of the FL for the GEO 150 or the LEO160. For example, a millimeter wave (38 GHz)

band may be used as the frequency band of the FL for the HAPS 200.

The capability information reception unit 130 receives capability information (UE Capability Information) of the UE300. The capability information reception unit 130 may receive UE Capability Information transmitted from the UE 300 via the TN, or may receive UE Capability Information transmitted from the UE 300 via the NTN.

The UE Capability Information may be transmitted in response to a system information block (SIB) transmitted from the network, or may be transmitted autonomously by the UE 300. Alternatively, the UE Capability Information may be transmitted from the UE 300 in response to a request from the network.

The UE Capability Information may include the Extra TN capability described above. When an airborne TN node such as the HAPS 200 exists between the UE 300 and the UE, the capability information reception unit 130 may receive the Extra-TN capability of the UE 300 applied when the airborne TN node is used. In this embodiment, the capability information reception unit 130 constitutes a reception unit.

The control unit 140 controls each functional block of the gateway device 100. In particular, in this embodiment, the control unit 140 executes communication configurations of the UE 300 via the TN or the NTN based on the UE Capability Information transmitted from the UE 300.

The control unit 140 may execute communication configurations via the airborne TN node based on the Extra-TN capability received from the UE 300. Specifically, the control unit 140 can execute configurations related to a band to be used, transmission power, CA support, and the CHO applied to the UE300 based on the Extra-TN capability.

(3) Operation of Radio Communication System

Next, operation of the radio communication system 10 will be described. Specifically, an operation example of the gateway device 100 (gNB) and the UE 300 in the case of passing through a special altitude airborne node (airborne TN node) such as the HAPS will be described.

(3.1) Assumptions and Problems

As described above, the network (operator) may configure the gNB (gateway device) after deciding in advance whether to operate as the TN cell $C_{TN}$ or the NTN cell $C_{NTN}$. The UE 300 may operate assuming that it is the TN cell $C_{TN}$ unless there is a notification from the network that it is the NTN cell $C_{NTN}$.

When operating as the TN cell $C_{TN}$ via a GEO or a LEO, which have large delays in radio sections, a special implementation is required. When operating as the TN cell $C_{TN}$ via the HAPS, it is possible to communicate up to a certain cell radius even with a normal TN configuration.

When operating as the NTN cell $C_{NTN}$ via the GEO or the LEO, a communication using NR NTN is possible with a certain quality guaranteed by the 3GPP regulations. A communication as NR NTN via the HAPS is possible, but there is an aspect of being slightly overspecified, as described above. The UE recognizes that the cell is an NTN cell $C_{NTN}$ by the SIB1, and can connect to the NTN only when the UE supports the NTN (NTN-capable UEs). The UE also executes a synchronization establishment procedure (NTN-specific sync) based on the SIB19.

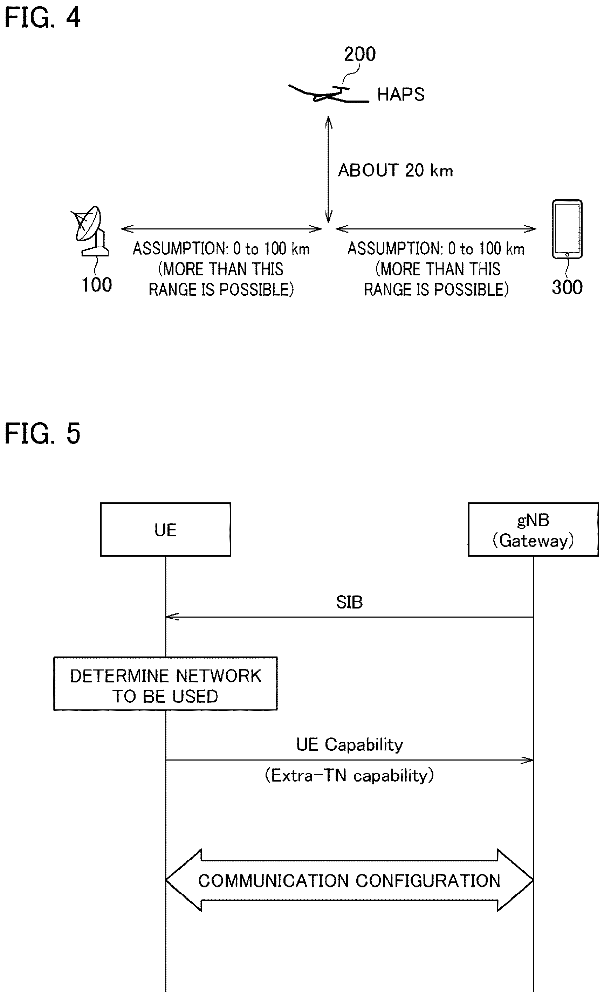

Figure 4 illustrates an example of a communication distance between the gateway device (gNB) and the UE 300 via the HAPS. According to the specification for TN in 3GPP Release-17, a maximum distance between a radio unit (RU) mounted on the HAPS and the UE is about 100 km (due to restriction by a physical random access channel (PRACH) preamble format 1, which has a longest cyclic prefix (CP) length).

When the UE initially accesses the RU (at the time of PRACH transmission), the RU needs to receive signals of a zero-distance terminal (a nearest UE) and a farthest UE in the cell, within a common Fast Fourier Transform (FFT) window, and a CP length of the PRACH format 1 is 684.38 μs. Therefore, a one-way distance is expressed as the following:

684.38 μs × 300,000 km/s × 1/2 (from RACH occasion to PRACH Rx at the radio base station) = 102.657 km.

box.

Unlike UAVs and GEOs/LEOs, the communication distance via the HAPS is about 100 km, which is the maximum distance that can be supported by the specifications for the TN in 3GPP Release-17. In the case of retransmission type (non-regenerative relay type), the distance between RU and UE can be about 40 to 200 km.

In 3GPP Release-17, the UE can transmit nonTerrestrialNetwork-r17 as UE-NR-Capability of the NTN. However, in 3GPP Release-17, there is no Capability specific to the UE connecting to the airborne TN nodes such as the HAPS. Therefore, even if the UE has the Capability to support the NTN, the gateway device (gNB) does not use the Capability and controls the UE in the TN cell $C_{TN}$ as a normal UE supporting only TN. Therefore, even when passing through the airborne TN node, it is not possible to change parameters (frequency band to be used, transmission power, carrier aggregation (CA) support, UL physical channel repetition count, or the like) specific to the airborne TN node. In other words, even when passing through the airborne TN node, only the same specifications (communication configurations) as when the UE

directly communicates with the gNB 170 (Terrestrial gNB) can be used.

However, when operated as the NTN cell $C_{NTN}$, the UE in the NTN cell $C_{NTN}$ can notify the gateway device (gNB) of the Capability of the NTN via nonTerrestrialNetwork-r17. Thus, the gateway device (gNB) can flexibly control the communication configurations of the UE that supports NTN.

(3.2) Operation Example

The following operation example describes an operation example in which a special UE Capability for connecting to the airborne TN node, specifically an Extra-TN capability, is transmitted to the gNB when the UE communicates with the gateway device (gNB) via an airborne TN node such as the HAPS.

FIG. 5 shows an example of a transmission sequence of UE Capability Information (Extra-TN capability). As illustrated in FIG. 5, the UE receives the SIB (for example, SIB1) reported to a cell from the gNB. The SIB may include an information element (IE) indicating the TN or the NTN. The SIB may also include the IE (or field) indicating the TN via an airborne TN node such as the HAPS. The SIB is not limited to the SIB1 and may be another SIB (for example, SIB19).

The UE determines whether the network (cell) to be used (connected) is the TN (cell) or the NTN (cell) based on the information element included in the SIB.

Here, when the network to be used is the TN (TN via an airborne TN node may be included), the UE may transmit UE capability information including Extra-TN capability
y to the gNB. The UE and the gNB execute communication configuration for the UE based on the extra-TN capability.

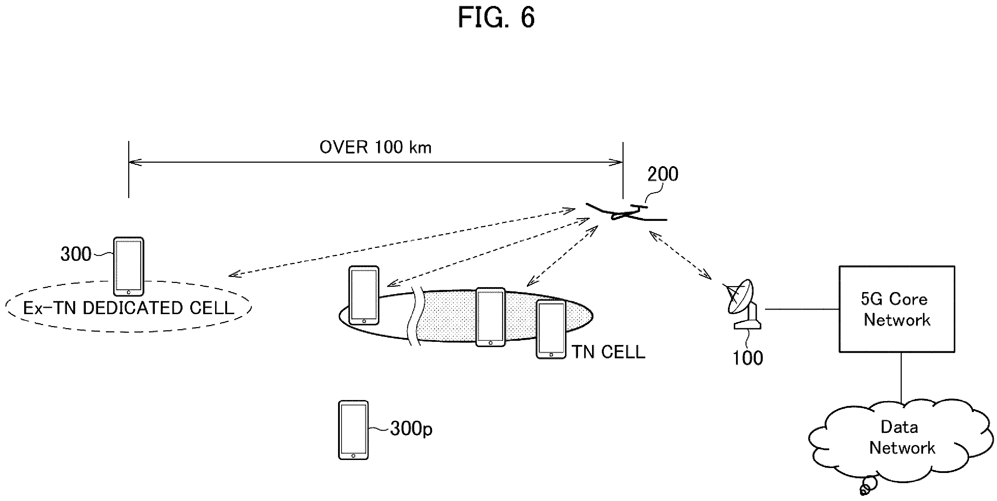

FIG. 6 shows a configuration example of an Extra TN dedicated cell and a TN cell formed via an airborne TN node. As illustrated in FIG. 6, the Extra TN (Ex-TN) dedicated cell may be formed in which the distance to the HAPS (RU) may exceed 100 km, and the UE 300 may be in the Ex-TN dedicated cell. The UE 300 capable of transmitting the Extra TN capability can communicate with the HAPS 200 (airborne TN node) regardless of the communication distance constraint of the TN. The UE 300 having the Extra TN capability can improve the communication performance by, for example, increasing the transmission power higher than that of the gNB 170 (Terrestrial gNB) connection.

In the case of a UE 300p which does not have the Extra TN capability, a communication configuration similar to that of the UE 300 is not possible, and an area which becomes a coverage hole may occur for the UE 300p.

The Extra TN capability may be interpreted as a specific Capability that applieswhen an airborne TN node exists on the route between the UE and the gNB (gateway device). When the UE 300 transmits the Extra TN capability, the gNB can execute a control specific to the Extra TN capability as described above. Such functions are not specified in the 3GPP TN-related specifications, and newly provided.

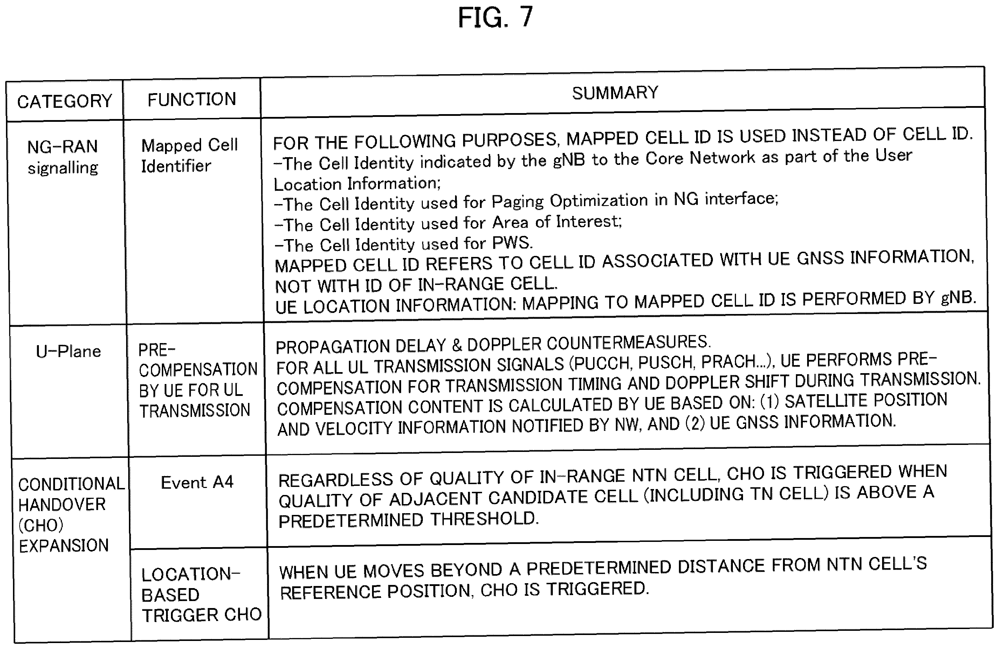

The Extra-TN capability may be interpreted as utilizing (at least some of) the existing Capabilities of non-TerrestrialNetwork-r17 even in the TN cells. FIG. 7 illustrates example functions that may be required in Extra TN dedicated cells.

Example functions may include UL transmission pre-compensation, CHO extension, and use of the Mapped Cell ID.

The Extra-TN capability may also modify performances of existing functions. For example, at least some of the functions specified in 3GPP TS38.306, such as frequency bands to be used, transmission power, carrier aggregation (CA) support, and the number of repetitions of UL physical channels, may be specified as the Extra-TN capability.

In this manner, the Extra-TN capability may be defined as a capability dedicated to airborne TN nodes, and the UE 300 may always report support for the Extra-TN capability to perform communication via airborne TN nodes.

Alternatively, the Extra-TN capability may be common to the Capabilities that is applied when communicating via the TN and/or the NTN. In this case as well, the UE 300 may always report support for the Extra-TN capability to perform communication via the airborne TN nodes.

(3.3) Variation

Although the HAPS is a typical airborne TN node as described above, various nodes existing in the sky, such as satellites, aircrafts, drones, helicopters, or balloons, may be included. The airborne TN node may also function as a radio relay device interposed between other radio communication nodes (such as a repeater, relay, or integrated access and backhaul (IAB) node).

The radio base station (gNB) may exist on the ground or in the sky, and functions of the gNB may be arranged separately on the ground and in the sky (for example, a central unit (CU) on the ground and a distributed unit (DU) in the sky).

In addition, the UE may be airborne, such as HAPS, satellites, aircrafts, drones, helicopters, or balloons, in addition to general smartphones on the ground.

The granularity applied to the Extra-TN capability may be, for example, per band (band combinations). New bands (band combinations) for the Extra-TN (cells) may be defined. Just as Air-to-ground (ATG) can report a new

capability for the ATG bands, a new Capability may be reported for the Extra-TN bands.

The granularity may be applied to the Extra-TN capability for each UE, and reported Capability values may vary for each UE.

(3.4) Effects

According to the operation example described above, when an airborne TN node exists between the UE and the gNB (gateway device), the UE can transmit the Extra-TN capability. Based on the Extra-TN capability, the network (gNB) can execute appropriate communication configurations according to the characteristics of the TN via the airborne TN node. In this way, it is possible to expand the communication distance and to improve the communication performance of the UE in the TN cell $C_{TN}$ formed by the airborne TN node.

For example, it is possible to secure a line (channel) margin by increasing the transmission power of the UE higher than that in the case of a Terrestrial gNB connection only when passing through the HAPS. In addition, by pre-compensation of UL transmission timing by the UE specified in the NTN specification, it is possible to mitigate the restriction of the communication distance up to about 100 km.

In addition, it is possible to upgrade operation specifications of the TN cell $C_{TN}$, and to improve the flexibility of the network in this manner, when the operation as the NTN cell $C_{NTN}$ cannot be performed or is not performed even when passing through the airborne node.

For example, when ten cells are formed via the HAPS, it is possible to operate a mixture of TN cells and NTN cells. Specifically, ten TN cells $C_{TN}$ may be operated, and a communication configuration capable of improving performance may be applied to the UE having the Extra-TN capability. Further, a TN cell $C_{TN}$ may be formed to communicate with the UE not having an NTN capability. However, a communication configuration capable of improving performance may be applied to the UE having the Extra-TN capability.

(4) Other Embodiments

Embodiments have been described above, but embodiments are not limited to the embodiments above, and it is obvious to those skilled in the art that various modifications and improvements are possible.

For example, the name "Extra-TN capability" is used in the above-described embodiments, a different name may be used as long as the Capability of the UE is applied using a TN via an airborne TN node such as the HAPS. **In** addition, when using the airborne TN node, a new network name (For example, Intermediate Network) may be given to distinguish it from TN and NTN.

The gateway device (ground station device) may include some or all of the functions of the gNB.

**In** the above disclosure, terms such as configure, activate, update, indicate, enable, specify, and select may be read interchangeably. Similarly, terms such as link, associate, correspond, and map may be read interchangeably, and terms such as allocate, assign, monitor, and map may be read interchangeably.

**In** addition, terms such as specific, dedicated, UE-specific, and UE-dedicated may be read interchangeably. Similarly, terms such as common, shared, group-common, UE-common, and UE-shared may be read interchangeably.

The block diagram (FIGS. 2 and 3) used in the description of the above-described embodiment illustrates blocks in units of functions. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

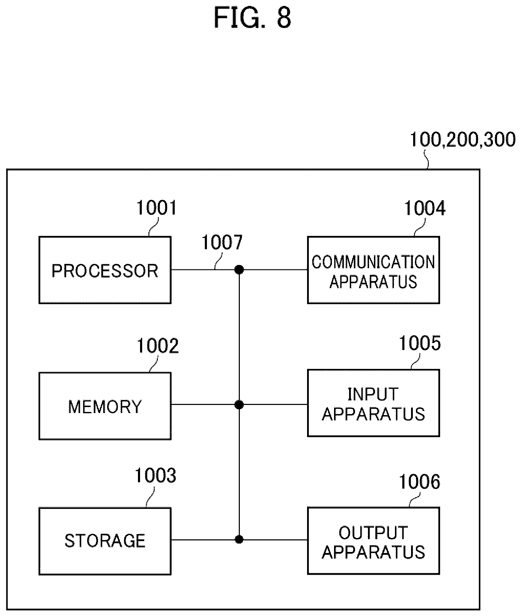

Further, the above-described gNB 100 and UE 300 (the devices) may function as a computer that performs processing of a radio communication method of the present disclosure. FIG. 8 is a diagram illustrating an example of a hardware configuration of the device. As illustrated in FIG. 8, the device may be configured as a computer device including a processor 1001, a memory 1002, a storage 1003, a communication device 1004, an input device 1005, an output device 1006, a bus 1007, and the like.

Furthermore, in the following description, the term "device" can be read as meaning circuit, device, unit, or the

like. The hardware configuration of the device may include one or more devices illustrated in the figure or may not include some of the devices.

Each of the functional blocks of the device (FIGS. 2 and 3) is implemented by means of any of hardware elements of the computer device or a combination of the hardware elements.

Each function in the device is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus." The above recording medium may be a database including the memory 1002 and/or the storage 1003, a server, or any other appropriate medium.

The communication apparatus 1004 is hardware (transmitting/receiving device) for allowing inter-computer communication via at least one of wired and wireless networks, and may be referred to as, for example, a "network device," a "network controller," a "network card," a "communication module," and so on.

The communication apparatus 1004 may be configured to include a high frequency switch, a duplexer, a filter, a frequency synthesizer, and so on in order to realize, for example, at least one of frequency division duplex (FDD) and time division duplex (TDD).

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the device may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), SUPER 3G, IMT-Advanced, 4th generation mobile communication system (4G), 5th generation

mobile communication system (5G), 6th generation mobile communication system (6G), xth generation mobile communication system (xG (where x is, for example, an integer or a decimal)), Future Radio Access (FRA), New Radio (NR), W-CDMA(registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these. According to the above, a case is described in which there is a single network node other than the base station 10. However, a combination of multiple other network nodes may be considered (e.g., MME and S-GW).

Information or signals (information and the like) may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any of a one of various different technologies. For example, data, an instruction, a command, information, a signal, a bit, a symbol, a chip, or the like, described throughout the present application, may be represented by a voltage, an electric current, electromagnetic waves, magnetic fields, magnetic particle, optical fields, a photon, or a combination thereof.

It should be noted that a term used in the present specification and/or term required for understanding of the present specification may be replaced by a term having the same or similar meaning. For example, a channel and a symbol may be a signal (signaling). Further a signal may also be a message. Further, the component carrier (CC) may be referred to as a carrier frequency, cell, frequency carrier, or the like.

As used in the present disclosure, the terms "system" and "network" are used interchangeably.

Furthermore, the information, parameters, and the like, described in the present disclosure may be expressed using absolute values, relative values from a predetermined values, or they may be expressed using corresponding different information. For example, a radio resource may be what is indicated by an index.

The names used for the parameters described above are not used as limitation. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a

"transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells (also called sectors). When a base station accommodates a plurality of cells, the entire coverage area of the base station can be partitioned into multiple smaller areas, and each smaller area can provide communication services through base station subsystems (for example, indoor small base stations (Remote Radio Heads (RRHs))).

The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a mobile station (hereinafter, a user terminal). For example, each aspect/embodiment of the present disclosure may be applied to the structure that replaces a communication between a base station and a mobile station with a communication between a plurality of mobile stations (for example, which may be referred to as "Device-to-Device (D2D)," "Vehicle-to-Everything (V2X)," and the like). In this case, mobile stations may have the functions of the base stations described above. The words such as "uplink" and "downlink" may be interpreted as the words corresponding to the terminal-to-terminal communication (for example, "side"). For example, an uplink channel, a downlink channel and so on may be interpreted as a sidelink channel (or sidelink).

Likewise, the mobile station in the present disclosure may be interpreted as base station. In this case, the base station may have the functions of the mobile station described above.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a

"subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

"Means" included in the configuration of each of the above apparatuses may be replaced by "parts", "circuits",

"devices", etc.

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

As used herein, the term "determining" may encompasses a wide variety of actions. For example, "determining" may be regarded as judging, calculating, computing, processing, deriving, investigating, looking up (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing and the like. That is, "determining" may be regarded as a certain type of action related to determining.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

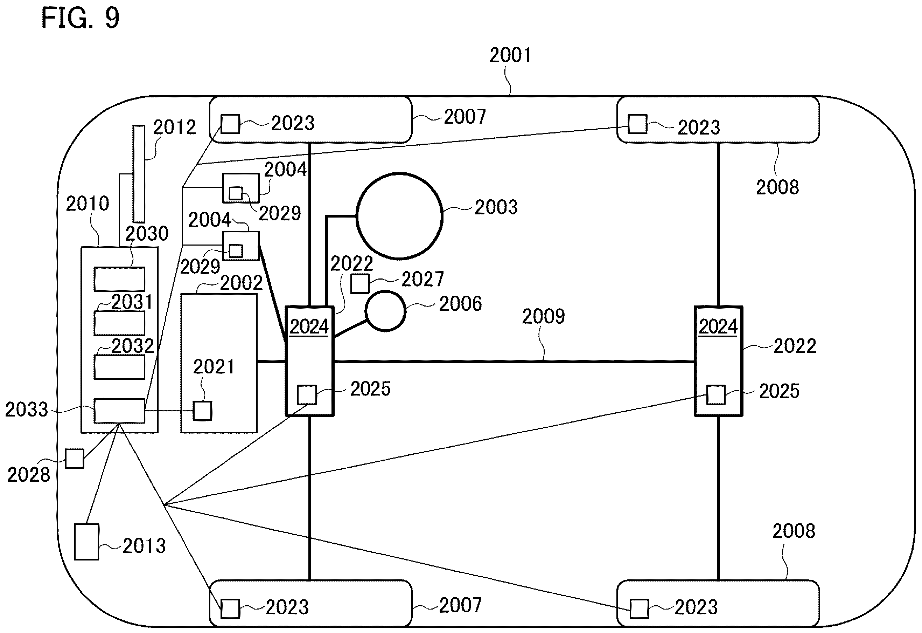

FIG. 9 shows a configuration example of a vehicle 2001. As shown in FIG. 9, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user. The electronic control unit 2010 includes a microprocessor 2031, a memory (ROM, RAM) 2032, and a communication port (IO port) 2033. The electronic control unit 2010 receives signals from the various sensors 2021-2027 provided in the vehicle. The electronic control unit 2010 may be referred to as an ECU (Electronic control unit).

The signals from the various sensors 2021 to 2028 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 1 by using information obtained from the external device through the communication module 2013 or the like.

The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 1 via a communication port. For example, the communication module 2013 transmits and receives data via a communication port 2033, to and from the drive unit 2002, the steering unit 2003, the accelerator pedal 2004, the brake pedal 2005, the shift lever 2006, the left and right front wheels 2007, the left and right rear wheels 2008, the axle 2009, the microprocessor 2031 and the memory (ROM, RAM) 2032 in the electronic control unit 2010, and sensors 2021 to 2028 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of the signals from the various sensors 2021 to 2028 input to the electronic control unit 2010, information obtained based on the signals, and information based on input from the outside (user) obtained via the information service unit 2012 to an external device via wireless communication. The electronic control unit 2010, the various sensors 2021 to 2028, the information service unit 2012, etc. may be called an input unit that accepts input. For example, the PUSCH transmitted by the communication module 2013 may include information based on the above input.

The communication module 2013 receives various types of information (traffic information, signal information, inter-vehicle information, etc.) transmitted from the external devices and displays the received information on the information service unit 2012 provided in the vehicle. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021-2028, etc., mounted in the vehicle 2001.

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

(Supplementary Notes)

The disclosure described above may be expressed as follows. A first feature provides a terminal including a transmission unit that transmits capability information of the terminal related to a non-terrestrial network to a radio base station; and a control unit that executes communication configurations via the non-terrestrial network based on the capability information. The transmission unit transmits additional capability information of the terminal that is applied when a terrestrial network node located in the air is used when the terrestrial network node exists between the terminal and the radio base station.

In a second feature according to the first feature, the transmission unit transmits the additional capability information including at least a part of the capability information.

In a third feature according to the first or second feature, the transmitting unit transmits the additional capability information indicating that communication via the terrestrial network node is supported.

In a fourth feature according to any of the first to third features, the transmitting unit transmits the additional capability information for frequency bands or each combination of the frequency bands to be used.

Reference Signs List

10 Radio communication system
30 5GC
40 Data network
100 Gateway device
110 Network connection unit
120 FL communication unit
130 Capability information reception unit
140 Control unit
150 GEO
160 LEO
170 gNB
200 HAPS
300, 300p UE
310 Radio communication unit
320 Capability information transmission unit

330 Handover execution unit
340 Control unit
1001 Processor
1002 Memory
1003 Storage
1004 Communication device
1005 Input device
1006 Output device
1007 Bus
2001 Vehicle
2002 Drive unit
2003 Steering unit
2004 Accelerator pedal
2005 Brake pedal
2006 Shift lever
2007 Left and right front wheels
2008 Left and right rear wheels
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port

**Claims**

**1.** A terminal comprising:

a transmission unit that transmits capability information of the terminal related to a non-terrestrial network to a radio base station; and
a control unit that executes communication configuration via the non-terrestrial network based on the capability information, wherein
the transmission unit transmits additional capability information of the terminal that is applied in the case of using a terrestrial network node located in the air when the terrestrial network node exists between the terminal and the radio base station.

**2.** The terminal according to claim 1, wherein the transmission unit transmits the additional capability information including at least a part of the capability information.

**3.** The terminal according to claim 1, wherein the transmitting unit transmits the additional capability information indicating that communication via the terrestrial network node is supported

**4.** The terminal according to claim 1, wherein the transmitting unit transmits the additional capability information for frequency bands or each combination of the frequency bands to be used.

**5.** A radio base station comprising:

a reception unit that receives additional capability information of a terminal applied in the case of using a terrestrial network node located in the air when the terrestrial network node exists between the radio base station and the terminal;
a control unit that executes communication configuration via the terrestrial network node based on the additional capability information.

**6.** A radio communication method comprising:

a step of transmitting capability information of a terminal related to a non-terrestrial network to a radio base station;
a step of executing communication configuration via the non-terrestrial network based on the capability information;
a step of transmitting additional capability information of the terminal applied in the case of using a terrestrial network node located in the air when the terrestrial network node exists between the terminal and the radio base station.

10
150
GEO
160
LEO
200
HAPS
170
Terrestrial
gNB
100
30
5G Core
Network
40
Data Network
$C_{TN}$
$C_{NTN}$
300

FIG. 1

FIG. 2

300
320
CAPABILITY INFORMATION TRANSMISSION UNIT
310
RADIO COMMUNICATION UNIT
330
HANDOVER EXECUTION UNIT
340
CONTROL UNIT

FIG. 3

100
130
CAPABILITY INFORMATION RECEPTION UNIT
110
NETWORK CONNECTION UNIT
140
CONTROL UNIT
120
FL COMMUNICATION UNIT

FIG. 4

200
HAPS
ABOUT 20 km
ASSUMPTION: 0 to 100 km
(MORE THAN THIS
RANGE IS POSSIBLE)
ASSUMPTION: 0 to 100 km
(MORE THAN THIS
RANGE IS POSSIBLE)
100
300

FIG. 5

UE
gNB
(Gateway)
SIB
DETERMINE NETWORK
TO BE USED
UE Capability
(Extra-TN capability)
COMMUNICATION CONFIGURATION

OVER 100 km
200
100
5G Core Network
Data Network
TN CELL
300p
300
Ex-TN DEDICATED CELL

FIG. 6

FIG. 7

| CATEGORY | FUNCTION | SUMMARY |
| --- | --- | --- |
| NG-RAN signalling | Mapped Cell Identifier | FOR THE FOLLOWING PURPOSES, MAPPED CELL ID IS USED INSTEAD OF CELL ID.<br>-The Cell Identity indicated by the gNB to the Core Network as part of the User Location Information;<br>-The Cell Identity used for Paging Optimization in NG interface;<br>-The Cell Identity used for Area of Interest;<br>-The Cell Identity used for PWS.<br>MAPPED CELL ID REFERS TO CELL ID ASSOCIATED WITH UE GNSS INFORMATION, NOT WITH ID OF IN-RANGE CELL.<br>UE LOCATION INFORMATION: MAPPING TO MAPPED CELL ID IS PERFORMED BY gNB. |
| U-Plane | PRE-COMPENSATION BY UE FOR UL TRANSMISSION | PROPAGATION DELAY & DOPPLER COUNTERMEASURES.<br>FOR ALL UL TRANSMISSION SIGNALS (PUCCH, PUSCH, PRACH...), UE PERFORMS PRE-COMPENSATION FOR TRANSMISSION TIMING AND DOPPLER SHIFT DURING TRANSMISSION.<br>COMPENSATION CONTENT IS CALCULATED BY UE BASED ON: (1) SATELLITE POSITION AND VELOCITY INFORMATION NOTIFIED BY NW, AND (2) UE GNSS INFORMATION. |
| CONDITIONAL HANDOVER (CHO) EXPANSION | Event A4 | REGARDLESS OF QUALITY OF IN-RANGE NTN CELL, CHO IS TRIGGERED WHEN QUALITY OF ADJACENT CANDIDATE CELL (INCLUDING TN CELL) IS ABOVE A PREDETERMINED THRESHOLD. |
| | LOCATION-BASED TRIGGER CHO | WHEN UE MOVES BEYOND A PREDETERMINED DISTANCE FROM NTN CELL'S REFERENCE POSITION, CHO IS TRIGGERED. |

FIG. 8

100,200,300
1001
PROCESSOR
1007
1004
COMMUNICATION APPARATUS
1002
MEMORY
1005
INPUT APPARATUS
1003
STORAGE
1006
OUTPUT APPARATUS

FIG. 9
2001
2012
2023
2007
2023
2008
2004
2029
2003
2010
2004
2030
2029
2022
2027
2002
2006
2031
2009
2024
2024
2022
2032
2021
2025
2025
2033
2028
2013
2008
2023
2007
2023

## INTERNATIONAL SEARCH REPORT

International application No. **PCT/JP2023/042237**

**A. CLASSIFICATION OF SUBJECT MATTER**

***H04W 8/22***(2009.01)i; ***H04W 84/06***(2009.01)i
FI: H04W8/22; H04W84/06

According to International Patent Classification (IPC) or to both national classification and IPC

**B. FIELDS SEARCHED**

Minimum documentation searched (classification system followed by classification symbols)

H04W8/22; H04W84/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | Huawei, HiSilicon, Remaining issues on UE capability signalling for IoT-NTN [online], 3GPP TSG RAN WG2 Meeting #120 R2-2212831, [retrieved on 16 May 2024], Internet <URL: https://www.3gpp.org/ftp/TSG_RAN/WG2_RL2/TSGR2_120/Docs/R2-2212831.zip>, 04 November 2022<br>chapters 1, 2, 5 | 1-6 |
| Y | Thales, Support of Non-Terrestrial Networks [online], 3GPP TSG-RAN WG2 Meeting #117-e R2-2204262, [retrieved on 16 May 2024], Internet <URL: https://www.3gpp.org/ftp/TSG_RAN/WG2_RL2/TSGR2_117-e/Docs/R2-2204262.zip>, 14 March 2022, pp. 1, 4-12, 25, 26, 54-56<br>appendix, sections A.1, A.8 | 1-6 |
| Y | Thales [Moderator], Workplan, scope and scenarios email discussion [online], 3GPP TSG-RAN WG2 Meeting #111-e R2-2008228, [retrieved on 16 May 2024], Internet <URL: https://www.3gpp.org/ftp/TSG_RAN/WG2_RL2/TSGR2_111-e/Docs/R2-2008228.zip>, 01 September 2020, pp. 1-26, work item: NR_NTN_solutions<br>sections 2.8, 2.9 | 1-6 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 May 2024** | **28 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2023/042237**

**C. DOCUMENTS CONSIDERED TO BE RELEVANT**

| Category* | Citation of document, with indication, where appropriate, of the relevant passages | Relevant to claim No. |
|---|---|---|
| Y | 3rd Generation Partnership Project; Technical Specification Group Radio Access Network; NR; User Equipment (UE) radio access capabilities (Release 17) [online], 3GPP TS 38.306 V17.6.0 (2023-09), [retrieved on 16 May 2024], 28 September 2023, pp. 1-8, 12-17, 34-35, 54-57, 80-86, 234, Internet <URL: https://www.3gpp.org/ftp/Specs/archive/38_series/38.306/38306-h60.zip> sections 4.2, 4.2.1, 4.2.2, 4.2.7.2 | 4 |
| A | JP 2023-116023 A (NTT DOCOMO, INC.) 22 August 2023 (2023-08-22) paragraphs [0006], [0025], [0042]-[0048], [0053], fig. 3, 12 | 1-6 |
| A | US 2022/0239417 A1 (FG INNOVATION COMPANY LIMITED) 28 July 2022 (2022-07-28) paragraphs [0061]-[0062], [0145], fig. 3 | 1-6 |

Form PCT/ISA/210 (second sheet) (July 2022)

**INTERNATIONAL SEARCH REPORT**
**Information on patent family members**

International application No.
**PCT/JP2023/042237**

| Patent document cited in search report | Publication date (day/month/year) | Patent family member(s) | Publication date (day/month/year) |
|---|---|---|---|
| JP 2023-116023 A | 22 August 2023 | WO 2023/153111 A1<br>paragraphs [0006], [0025], [0042]-[0048], [0053], fig. 3, 12 | |
| US 2022/0239417 A1 | 28 July 2022 | CN 114175804 A<br>paragraphs [0052]-[0053], [0136], fig. 3<br>WO 2021/018221 A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2023053298 A


### Non-patent literature cited in the description


- 3rd Generation Partnership Project; Technical Specification Group Radio Access Network; NR; Radio Resource Control (RRC) protocol specification (Release 17). *3GPP TS 38.331 V17.5.0*, June 2023